# EUROPEAN PATENT APPLICATION

(11) **EP 3 647 197 A1**
(43) Date of publication of application: **06.05.2020**
(21) Application number: 19205865.9
(22) Date of filing: 29.10.2019
(51) Int. Cl.: B64D 11/06, B64D 25/10, B64D 17/62, B64D 17/74

(54) **EMERGENCY MANUAL PARACHUTE OPERATION SYSTEM**

(30) Priority: 29.10.2018 US 201816173957
(71) Applicant: AMI Industries, Inc., Colorado Springs, CO 80916 (US)
(72) Inventor: MARUTZKY, Kyler, Colorado Springs, CO Colorado 80908 (US); BROWNSBERGER, Timothy, Colorado Springs, CO Colorado 80923 (US); BENJAMIN, Jeff, Colorado Springs, CO Colorado 80920 (US)
(74) Representative: Dehns

(57) **Abstract**

A chute-deployment-seat-release system (120) for an ejection seat (106) may be configured to deploy a parachute (112) from the ejection seat (106) and release an occupant restraint (114) of the ejection seat (106). The chute-deployment-seat-release system (120) may comprise an auto-deployment assembly (140), including a first power supply (146), and a manual deployment assembly (150), including a second power supply (158) and a handle (152). The first power supply (146) may be configured to activate in response to expulsion of the ejection seat (106) from an aircraft (102). The second power supply (158) may be configured to activate in response to an actuation of the handle (152).

## Description

### FIELD

The present disclosure relates to ejection seats, and more specifically, to parachute deployment systems for ejection seats.

### BACKGROUND

Ejection seats are designed to expel pilots from an aircraft. Typically, ejection seats include a chute-deployment-seat-release system configured to deploy a main canopy of the ejection seat's parachute assembly and release the pilot from the ejection seat. The chute-deployment-seat-release system may be activated automatically upon discharge of the ejection seat from the aircraft. Ejection seats also generally include a manual, or pilot actuated, means for deploying the main parachute and releasing the pilot from the ejection seat. For example, current ejection seats may include a handle that, in response to being pulled, actuates a system that deploys the main parachute and releases the pilot from the ejection seat. These manually deployed systems may be configured such that pulling the handle a first stroke distance activates an emergency power supply that deploys the main parachute and pulling the handle a second stroke distance actuates a restraint pin that releases the pilot from the seat. Manually deployed systems tend to be cumbersome and may require precise mechanical sequencing from dual mechanical inputs. Further, if a pilot only pulls the handle the first stroke distance, he/she remains attached to the seat, which can increase the chances of pilot injury during descent and landing.

### SUMMARY

In accordance with a first aspect, the present invention provides a chute-deployment-seat-release system for deploying a parachute from an ejection seat and releasing an occupant restraint of the ejection seat. In accordance with various embodiments, the chute-deployment-seat-release system may comprise a sequencer including a first logic circuit and a second logic circuit. A first power supply may be electrically coupled to the first logic circuit. The first power supply may be configured to activate in response to expulsion of the ejection seat. A second power supply may be electrically coupled to the second logic circuit. A handle may be operationally coupled to the second power supply. The second power supply may be configured to activate in response to an actuation of the handle.

In various embodiments, the chute-deployment-seat-release system may further comprise a parachute mortar and a restraint release thruster. A first electrical conduit may be coupled to the parachute mortar. The first logic circuit and the second logic circuit may be electrically coupled to the first electrical conduit. A second electrical conduit may be coupled to the restraint release thruster. The first logic circuit and the second logic circuit may be electrically coupled to the second electrical conduit. In various embodiments, the second logic circuit may be configured to fire the restraint release thruster a predetermined time delay after firing the parachute mortar.

In various embodiments, the chute-deployment-seat-release system may further comprise a cable configured to activate the second power supply. The handle may be configured to translate the cable. In various embodiments, the second power supply may comprise an activation pin. The second power supply may be configured to activate in response to a translation of the activation pin. The cable may be configured to translate the activation pin in response to the actuation of the handle.

In various embodiments, a cable crank may be operationally coupled to the cable. The cable crank may be configured to rotate about a pivot joint and translate the cable in response to the actuation of the handle. In various embodiments, the second power supply may comprise a thermal battery.

In accordance with a second aspect, the present invention provides an ejection seat configured to be expelled from an aircraft. In accordance with various embodiments, the ejection seat may comprise a parachute, an occupant restraint, and a chute-deployment-seat-release system configured to deploy the parachute and release the occupant restraint. The chute-deployment-seat-release system may comprise an auto-deployment assembly including a first power supply, and a manual deployment assembly including a second power supply and a handle. The first power supply may be configured to activate in response to expulsion of the ejection seat from the aircraft. The second power supply may be configured to activate in response to an actuation of the handle.

In various embodiments, the chute-deployment-seat-release system may further comprise a sequencer. The sequencer may include a first logic circuit and a second logic circuit. The first logic circuit may be electrically coupled to the first power supply, and the second logic circuit may be electrically coupled to the second power supply.

In various embodiments, the chute-deployment-seat-release system may further comprise a parachute mortar electrically coupled to the first logic circuit and the second logic circuit, and a restraint release thruster electrically coupled to the first logic circuit and the second logic circuit. In various embodiments, the second logic circuit may be configured to fire the restraint release thruster a predetermined time delay after firing the parachute mortar.

In various embodiments, the manual deployment assembly may further comprise a cable configured to activate the second power supply. The handle may be configured to translate the cable. In various embodiments, the second power supply may comprise an activation pin. The second power supply may be configured to activate in response to a translation of the activation pin. The cable may be configured to translate the activation pin in response to the actuation of the handle. In various embodiments, the second power supply may comprise a thermal battery.

In accordance with a third aspect, the present invention provides a chute-deployment-seat-release system configured to deploy a parachute and release an occupant restraint of an ejection seat. In accordance with various embodiments, the chute-deployment-seat-release system may comprise an auto-deployment assembly including a first power supply, and a manual deployment assembly including a second power supply and a handle. The first power supply may be configured to activate in response to expulsion of the ejection seat from an aircraft. The second power supply may be configured to activate in response to an actuation of the handle.

In various embodiments, the chute-deployment-seat-release system may further comprise a sequencer. The sequencer may include a first logic circuit and a second logic circuit. The first logic circuit may be electrically coupled to the first power supply, and the second logic circuit may be electrically coupled to the second power supply.

In various embodiments, a parachute mortar may be electrically coupled to the first logic circuit and the second logic circuit. A restraint release thruster may be electrically coupled to the first logic circuit and the second logic circuit. In various embodiments, the second logic circuit may be configured to fire the restraint release thruster a predetermined time delay after firing the parachute mortar.

In various embodiments, the manual deployment assembly may further comprise a cable configured to activate the second power supply. The handle may be configured to translate the cable. In various embodiments, the second power supply comprises an activation pin. The second power supply may be configured to activate in response to a translation of the activation pin. The cable may be configured to translate the activation pin in response to the actuation of the handle.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates an ejection seat being launched from an aircraft cockpit, in accordance with various embodiments;
FIG. 2 illustrates a perspective view of an ejection seat including a chute-deployment-seat-release system, in accordance with various embodiments;
FIG. 3 illustrates a perspective view of a chute-deployment-seat-release system for an ejection seat, in accordance with various embodiments;
FIG. 4 illustrates a perspective view of components of a manual deployment assembly of the chute-deployment-seat-release system of FIG. 3, in accordance with various embodiments, in accordance with various embodiments;
FIG. 5 illustrates a perspective view of components the manual deployment assembly of the chute-deployment-seat-release system of FIG. 3;
FIG. 6 illustrates a schematic of a chute-deployment-seat-release system for an ejection seat, in accordance with various embodiments; and
FIG. 7 illustrates a process flow diagram for manually deploying a chute-deployment-seat-release system for an ejection seat, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to tacked, attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

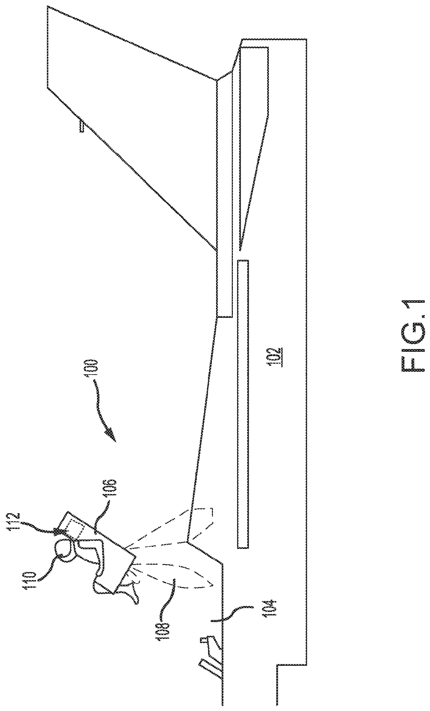

With reference to FIG. 1, an aircraft ejection system 100 is shown, in accordance with various embodiments. Aircraft ejection system 100 may be installed in aircraft 102 to safely expel an ejection seat 106 and an occupant 110 of ejection seat 106 from a cockpit 104 of aircraft 102. Ejection seat 106 may be urged from cockpit 104 by a propulsion system 108. Aircraft ejection system 100 may include a main parachute 112 configured to deploy from ejection seat 106. In various embodiments, prior to deployment of main parachute 112, at least a portion of main parachute 112 may be stored within ejection seat 106.

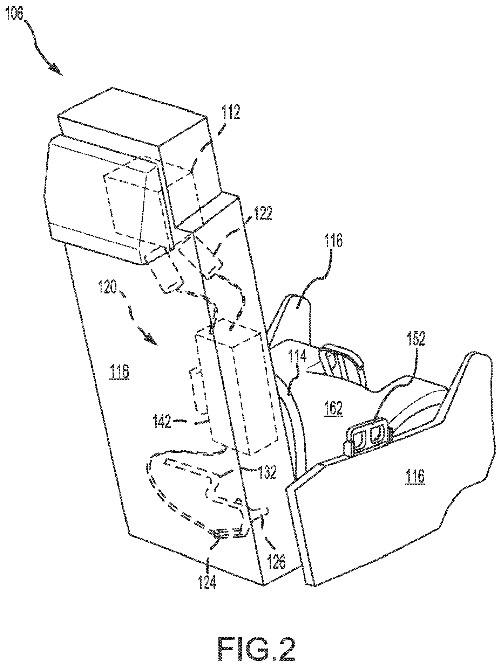

With reference to FIG. 2, ejection seat 106 is illustrated, in accordance with various embodiments. Ejection seat 106 may include a chute-deployment-seat-release system 120. Chute-deployment-seat-release system 120 is configured to deploy main parachute 112 and release an occupant restraint 114. Occupant restraint 114 may include a seat belt and/or harnesses configured to secure occupant 110 (FIG. 1) to ejection seat 106. While FIG. 2 illustrates one occupant restraint 114, it is further contemplated and understood that ejection seat 106 may include any number of occupant restraints which may be released by chute-deployment-seat-release system 120. Releasing occupant restraint(s) 114 allows ejection seat 106 to separate from occupant 110 (FIG. 1). Chute-deployment-seat-release system 120 may be located generally within and/or affixed to a frame 118 of ejection seat 106.

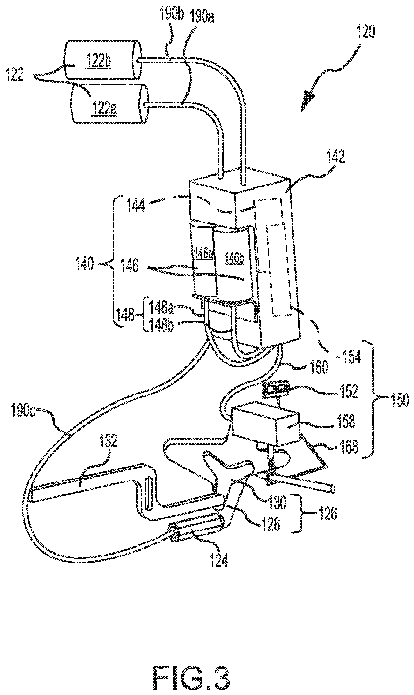

FIG. 3 illustrates chute-deployment-seat-release system 120 with ejection seat 106 removed for clarity. With combined reference to FIGs. 2 and 3, chute-deployment-seat-release system 120 may include one or more parachute mortar(s) 122. In various embodiments, chute-deployment-seat-release system 120 includes a primary parachute mortar 122a and a secondary parachute mortar 122b to provide redundancy should primary parachute mortar 122a fail. Main parachute 112 may deploy in response to chute-deployment-seat-release system 120 firing (i.e., activating) primary parachute mortar 122a or secondary parachute mortar 122b. Chute-deployment-seat-release system 120 further includes a restraint release thruster 124. Occupant restraint 114 is configured to release in response to chute-deployment-seat-release system 120 firing (i.e., activating) restraint release thruster 124.

In various embodiments, restraint release thruster 124 may be configured to actuate a bell crank assembly 126 of chute-deployment-seat-release system 120. For example, restraint release thruster 124 may comprise an electrically activated pyrotechnic device configured to generate a burst of gas that pushes, or otherwise actuates, a piston configured to contact and actuate (e.g., rotate) bell crank assembly 126. Actuation of bell crank assembly 126 translates a restraint pin puller 132 coupled to bell crank assembly 126. Translation of restraint pin puller 132 causes occupant restraint 114 to release, thereby allowing occupant 110 (FIG. 1) to separate from ejection seat 106. In various embodiments, bell crank assembly 126 may include a first crank 128 and a second crank 130. First crank 128 may rotate in response to restraint release thruster 124 being fired. Second crank 130 may be rotationally coupled to first crank 128 such that rotation of first crank 128 is translated to second crank 130. Second crank 130 may be coupled to and/or configured to translate restraint pin puller 132. In this regard, restraint pin puller 132 may be translated and occupant restraint 114 may be released in response to rotation of second crank 130.

Chute-deployment-seat-release system 120 may be configured to automatically deploy in response to ejection seat 106 being expelled from aircraft 102. In various embodiments, chute-deployment-seat-release system 120 may include an auto-deployment assembly 140 configured to fire parachute mortar 122 and restraint release thruster 124 in response to ejection seat 106 being expelled from aircraft 102. Chute-deployment-seat-release system 120 further includes an ejection seat sequencer 142. Sequencer 142 includes various logic and circuitry configured to regulate the deployment of main parachute 112 and the release of occupant restraint 114. In various embodiments, sequencer 142 includes a first logic circuit 144 and a second logic circuit 154.

Auto-deployment assembly 140 is configured to activate first logic circuit 144. For example, auto-deployment assembly 140 may include a first power supply 146. In various embodiments, first power supply 146 comprises a primary first power supply 146a and a secondary first power supply 146b for redundancy should primary first power supply 146a fail. First power supply 146 is configured to activate in response to ejection seat 106 being expelled from aircraft 102 (FIG. 1). Upon being activated, first power supply 146 provides electricity (e.g., current) to first logic circuit 144. First power supply 146 may be electrically coupled to first logic circuit 144 via an electrical conduit (e.g., wires) 148. Electrical conduit 148 may include a first electrical conduit 148a electrically coupled to primary first power supply 146a, and a second electrical conduit 148b electrically coupled to secondary first power supply 146b.

In various embodiments, primary first power supply 146a and secondary first power supply 146b may each comprise a thermal battery configured to activate in response to expulsion of ejection seat 106. For example, expulsion of ejection seat 106 may cause a chemical reaction within the thermal battery. The chemical reaction generates electricity that is provided to first logic circuit 144 via electrical conduit 148. In various embodiments, first logic circuit 144 is configured to fire restraint release thruster 124 a predetermined time delay after firing parachute mortar 122. The time delay may comprise any suitable time delay based on properties of parachute mortar 122, restraint release thruster 124, ejection seat 106, the type of aircraft, and/or the load limitations of the object being carried by main parachute 112. In that regard, the time delay may be about 0.10 seconds to about 2 seconds, or about 1 second to about 2 seconds (wherein about in this context only refers to +/- 0.025 seconds). In various embodiments, the time delay may be about 0.25 seconds.

Chute-deployment-seat-release system 120 is also configured to be manually deployed by the occupant of ejection seat 106. In accordance with various embodiments, chute-deployment-seat-release system 120 includes a manual deployment assembly 150. Manual deployment assembly 150 incudes a handle 152. Manual deployment assembly 150 is configured to fire parachute mortar 122 and restraint release thruster 124, in response to actuation (i.e., pulling) of handle 152. In various embodiments, handle 152 may be located proximate a seat pan 162 of ejection seat 106. For example, ejection seat 106 may include a pair of side panels 116 located on opposing sides of seat pan 162, and handle 152 may be located on or near one of the side panels 116. Manual deployment assembly 150 may provide a redundant, or back-up, system for deploying main parachute 112 and releasing occupant restraint 114 should the auto-deployment assembly 140 fail. In various embodiments, ejection seat 106 and chute-deployment-seat-release system 120 may be configured such that manual deployment assembly 150 cannot be activated prior to expulsion of ejection seat 106 from an aircraft. Stated differently, ejection seat 106 and handle 152 may be configured such that handle 152 cannot be actuated (e.g., is mechanically blocked or otherwise prevented from being pulled), while ejection seat 106 is located within cockpit 104 of aircraft 102 (FIG. 1).

Manual deployment assembly 150 is configured to activate second logic circuit 154 in sequencer 142. Second logic circuit 154 is configured to operate independently of first logic circuit 144. For example, second logic circuit 154 may be electrically isolated from first logic circuit 144. In various embodiments, manual deployment assembly 150 includes a second (or emergency) power supply 158. Second power supply 158 is configured to activate in response to actuation of handle 152. In other words, second power supply 158 does not activate automatically in response to ejection seat 106 being expelled from aircraft 102. Stated differently, if handle 152 is not actuated, second power supply 158 remains deactivated. Upon being activated, second power supply 158 provides electricity (e.g., current) to second logic circuit 154. Second power supply 158 may be electrically coupled to second logic circuit 154 via an electrical conduit (e.g., wire) 160.

In various embodiments, second power supply 158 may comprise a thermal battery configured to activate in response to actuation of handle 152. For example, actuation of handle 152 may cause a chemical reaction within the thermal battery. The chemical reaction generates electricity that is provided to second logic circuit 154 via electrical conduit 160. In various embodiments, second logic circuit 154 is configured to fire restraint release thruster 124 a predetermined time delay after firing parachute mortar 122. The time delay may comprise any suitable time delay based on properties of parachute mortar 122, restraint release thruster 124, ejection seat 106, the type of aircraft, and/or the load limitations of the object being carried by main parachute 112. In that regard, the time delay may be about 0.10 seconds to about 2 seconds, or about 1 second to about 2 seconds (wherein about in this context only refers to +/- 0.025 seconds). In various embodiments, the time delay may be about 0.25 seconds. The time delay initiated by second logic circuit 154 may be equal to the time delay initiated by first logic circuit 144.

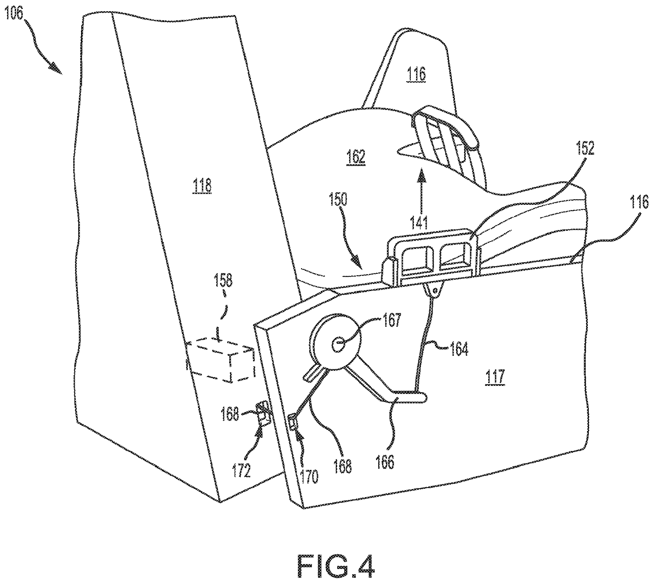

With reference to FIG. 4, a portion of manual deployment assembly 150 is illustrated, in accordance with various embodiments. In various embodiments, at least a portion of manual deployment assembly 150 may be located within a cavity, or volume, 117 defined by side panel 116. In FIG. 4, the outboard wall of side panel 116 has been removed to illustrate volume 117 and the portion of manual deployment assembly 150 located therein. Manual deployment assembly 150 includes second power supply 158 and an actuation structure, such as handle 152, configured to activate second power supply 158. In various embodiments, manual deployment assembly 150 may be configured such that actuating handle 152 in the direction of arrow 141 (i.e., away from side panel 116) activates second power supply 158.

In various embodiments, handle 152 may be coupled to a cable 164. Cable 164 may be operationally coupled to a cable crank 166. Manual deployment assembly 150 may be configured such that actuating handle 152 in the direction of arrow 141 causes cable crank 166 to rotate about a pivot joint 167. Cable crank 166 may be operationally coupled to a cable 168. Rotation of cable crank 166 about pivot joint 167 may cause actuation of cable 168. Actuation of cable 168 is configured to activate second power supply 158. In various embodiments, cable 168 may be located through an aperture 170 defined by side panel 116 and/or an aperture 172 defined by frame 118. In various embodiments, cables 164 and 168 may be part of single cable coupled to, and configured to be translated by, handle 152.

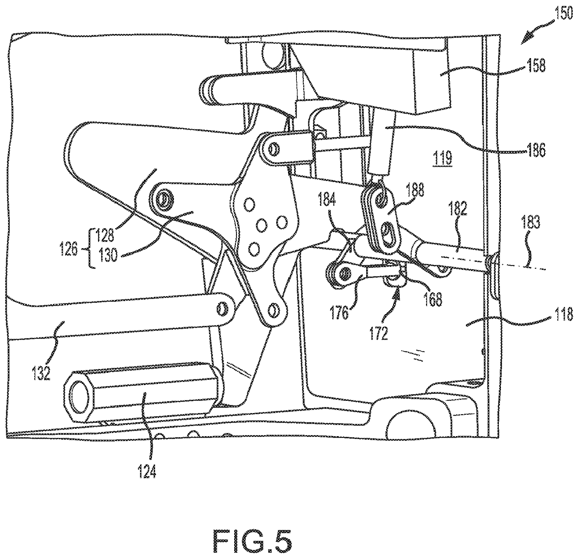

With reference to FIG. 5, additional details of manual deployment assembly 150 are illustrated, in accordance with various embodiments. In various embodiments, at least a portion of manual deployment assembly 150 may be located within a cavity, or volume, 119 defined by frame 118. In various embodiments, cable 168 may be operationally coupled to, and configured to rotate, a shaft 182. For example, an end 176 of cable 168 may be coupled to shaft 182 via a cable linkage 184. End 176 of cable 168 is distal, or generally opposite, handle 152 (FIG. 4). Translation of cable 168 may be transferred to shaft 182 via cable linkage 184. Stated differently, manual deployment assembly 150 may be configured such that translation of cable 168, due to actuation of handle 152, causes shaft 182 to rotate about an axis 183 of shaft 182. In various embodiments, shaft 182 may be operationally coupled to a pin 186 of second power supply 158 via a pin linkage 188. Pin linkage 188 is coupled between pin 186 and shaft 182. Rotation of shaft 182 may cause translation of pin linkage 188 and pin 186. Second power supply 158 is configured to activate in response to translation of pin 186. For example, in various embodiments, "pulling," or otherwise translating, pin 186 in a direction extending away from second power supply 158 causes a chemical reaction within second power supply 158. Second power supply 158 may also be configured such that "pushing" (i.e., translating) pin 186 in a direction extending toward second power supply 158 causes the chemical reaction. In either case, the chemical reaction generates an electrical current which is provided to second logic circuit 154 via electrical conduit 160, with momentary reference to FIG. 3.

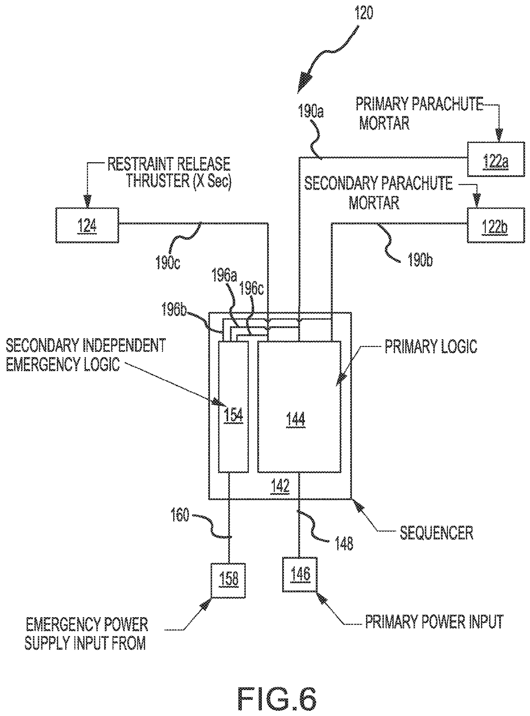

Referring to FIG. 6, a schematic of 120 is illustrated, in accordance with various embodiments. First power supply 146 is electrically coupled to an input of first logic circuit 144 via electrical conduit 148. A first output of first logic circuit 144 is electrically coupled to primary parachute mortar 122a via a first electrical conduit 190a. A second output of first logic circuit 144 is electrically coupled to secondary parachute mortar 122b via a second electrical conduit 190b. A third output of first logic circuit 144 is electrically coupled to restraint release thruster 124 via a third electrical conduit 190c.

Second power supply 158 is electrically coupled to an input of second logic circuit 154 via electrical conduit 160. A first output of second logic circuit 154 is electrically coupled to primary parachute mortar 122a via a first connecting conduit 196a electrically coupled to first electrical conduit 190a. A second output of second logic circuit 154 is electrically coupled to secondary parachute mortar 122b via a second connecting conduit 196b electrically coupled to second electrical conduit 190b. A third output of second logic circuit 154 is electrically coupled to restraint release thruster 124 via a third connecting conduit 196c electrically coupled to third electrical conduit 190c.

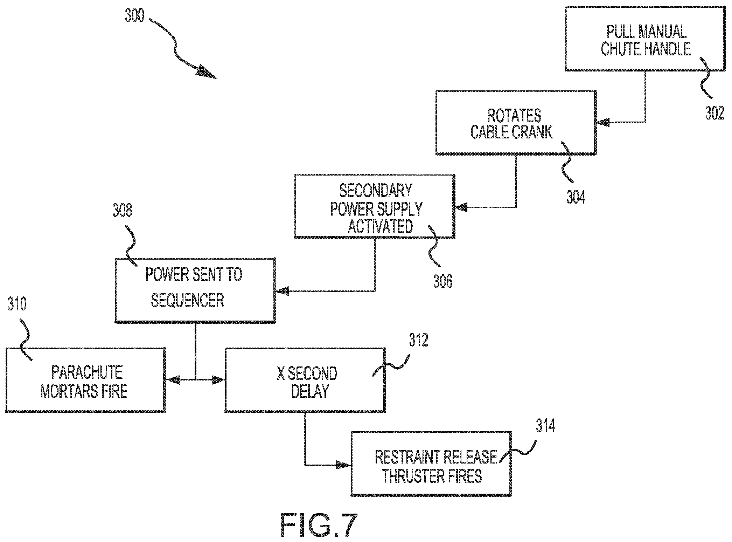

FIG. 7 illustrates a process flow 300 for manually deploying a parachute from an ejection seat and releasing an occupant restraint of the ejection seat, in accordance with various embodiments. With combined reference to FIG. 3, FIG. 6, and FIG. 7, in various embodiments, process 300 may be initiated by pulling handle 152 (step 302). Pulling handle 152 causes cable crank 166 to rotate (step 304). Rotation of cable crank 166 activates second power supply 158 (step 306). Activated second power supply 158 sends power to second logic circuit 154 in sequencer 142 (step 308). Upon receiving power (e.g., a current), second logic circuit 154 fires parachute mortar 122 to deploy main parachute 112 (step 310). Second logic circuit 154 may also be configured to initiate a predetermine time delay (step 312), upon receiving power from second power supply 158. After the time delay, restraint release thruster 124 fires and occupant restraint 114 releases (step 314).

Manual deployment assembly 150 of chute-deployment-seat-release system 120 employs an electrical means (e.g., second logic circuit 154) to deploy main parachute 112 and release occupant restraint 114. In this regard, chute-deployment-seat-release system 120 eliminates the mechanical sequencing (e.g., dual mechanical inputs) associated with conventional manual deployment assemblies for chute-deployment-seat-release systems. Manual deployment assembly 150 is configured such that a single input (i.e., actuation of handle 152) activates an emergency battery (e.g., second power supply 158) which then fires both parachute mortar 122 and restraint release thruster 124, via sequenced electrical signals, to deploy main parachute 112 and release occupant restraint 114, respectively. Chute-deployment-seat-release system 120, having manual deployment assembly 150, may include a fewer number of parts and/or less mechanical motion as compared to conventional manual chute-deployment-seat-release deployment assemblies, which tends to reduce cost and increase reliability of chute-deployment-seat-release system 120.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims and their legal equivalents, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A chute-deployment-seat-release system (120) for deploying a parachute (112) from an ejection seat (106) and releasing an occupant restraint (114) of the ejection seat (106), the chute-deployment-seat-release system (120) comprising:
a sequencer (142) including a first logic circuit (144) and a second logic circuit (154);
a first power supply (146) electrically coupled to the first logic circuit (144), wherein the first power supply (146) is configured to activate in response to expulsion of the ejection seat (106);
a second power supply (158) electrically coupled to the second logic circuit (154); and
a handle (152) operationally coupled to the second power supply (158), wherein the second power supply (158) is configured to activate in response to an actuation of the handle (152).

2. The chute-deployment-seat-release system of claim 1, further comprising:
a parachute mortar (122);
a first electrical conduit (190a) coupled to the parachute mortar (122), wherein the first logic circuit (144) and the second logic circuit (154) are electrically coupled to the first electrical conduit (190a);
a restraint release thruster (124); and
a second electrical conduit (190c) coupled to the restraint release thruster (124), wherein the first logic circuit (144) and the second logic circuit (154) are electrically coupled to the second electrical conduit (190c).

3. The chute-deployment-seat-release system of claim 2, wherein the second logic circuit (154) is configured to fire the restraint release thruster (124) a predetermined time delay after firing the parachute mortar (122).

4. The chute-deployment-seat-release system of any preceding claim, further comprising a cable (168) configured to activate the second power supply (158), wherein the handle (152) is configured to translate the cable (168).

5. The chute-deployment-seat-release system of claim 4, wherein the second power supply (158) comprises an activation pin (186), wherein the second power supply (158) is configured to activate in response to a translation of the activation pin (186), and wherein the cable (168) is configured to translate the activation pin (186) in response to the actuation of the handle (152).

6. The chute-deployment-seat-release system of claim 4 or 5, further comprising a cable crank (166) operationally coupled to the cable (168), wherein the cable crank (166) is configured to rotate about a pivot joint (167) and translate the cable (168) in response to the actuation of the handle (152).

7. The chute-deployment-seat-release system of any preceding claim, wherein the second power supply (158) comprises a thermal battery.

8. A chute-deployment-seat-release system (120) configured to deploy a parachute (112) and release an occupant restraint (114) of an ejection seat (106), the chute-deployment-seat-release system (120) comprising:
an auto-deployment assembly (140) including a first power supply (146), wherein the first power supply (146) is configured to activate in response to expulsion of the ejection seat (106) from an aircraft (102); and
a manual deployment assembly (150) including a second power supply (158) and a handle (152), wherein the second power supply (158) is configured to activate in response to an actuation of the handle (152).

9. The chute-deployment-seat-release system of claim 8, further comprising a sequencer (142), the sequencer (142) including a first logic circuit (144) and a second logic circuit (154), wherein the first logic circuit (144) is electrically coupled to the first power supply (146) and the second logic circuit (154) is electrically coupled to the second power supply (158).

10. The chute-deployment-seat-release system of claim 9, further comprising:
a parachute mortar (122) electrically coupled to the first logic circuit (144) and the second logic circuit (154); and
a restraint release thruster (124) electrically coupled to the first logic circuit (144) and the second logic circuit (154).

11. The chute-deployment-seat-release system of claim 10, wherein the second logic circuit (154) is configured to fire the restraint release thruster (124) a predetermined time delay after firing the parachute mortar (122).

12. The chute-deployment-seat-release system of any of claims 8 to 11, wherein the manual deployment assembly (150) further comprises a cable (168) configured to activate the second power supply (158), and wherein the handle (152) is configured to translate the cable (168).

13. The chute-deployment-seat-release system of claim 12, wherein the second power supply (158) comprises an activation pin (186), and wherein the second power supply (158) is configured to activate in response to a translation of the activation pin (186), and wherein the cable (168) is configured to translate the activation pin (186) in response to the actuation of the handle (152).

14. The chute-deployment-seat-release system of any of claims 8 to 13, wherein the second power supply (158) comprises a thermal battery.

15. An ejection seat (106) configured to be expelled from an aircraft (102), the ejection seat (106) comprising:
a parachute (112);
an occupant restraint (114); and
the chute-deployment-seat-release system (120) of any of claims 8 to 14 configured to deploy the parachute (112) and release the occupant restraint (114).
